# EUROPEAN PATENT APPLICATION

(11) **EP 2 706 000 A1**
(43) Date of publication of application: **12.03.2014**
(21) Application number: 13003926.6
(22) Date of filing: 06.08.2013
(51) Int. Cl.: B62K 3/00, A63C 17/14

(54) **Kick skater**

(30) Priority: 11.09.2012 JP 2012199020
(71) Applicant: J.D. JAPAN Co., Ltd., Minoh-shi Osaka 562-0036 (JP)
(72) Inventor: Yamabe, Hideyasu, Minoh-shi Osaka, 562-0036 (JP)
(74) Representative: Engelhardt, Harald

(57) **Abstract**

During braking of a kick skater, the danger of falling rearward is thoroughly eliminated. The kick skater includes a front wheel (15) capable of being manually braked, rear wheels (16,17), and lever units (35,39) capable of vertically tilting. When the front wheel (15) is raised to a predetermined height h from the ground, a ground contact part (39) comes into contact with the ground behind an axle (29) of each of the rear wheels (16) and (17) so as to tilt the lever units (35,39), bringing the front end of a lever member (35) into contact with each of the rear wheels (16,17).

## Description

### Field of the Invention

The present invention relates to a kick skater.

### Background of the Invention

A known kick skater having a tricycle structure is provided with an inverted-T-type board for boarding of a rider, a front wheel operable with a handlebar, and a pair of left and right swivel rear wheels (for example, see Design Registration No. 1333819).

The kick skater of Design Registration No. 1333819 includes a brake lever attached to the handlebar as a brake mechanism. The brake lever is operated to press the guard of the front wheel to the tread of the front wheel, thereby applying a brake to the front wheel.

However, the kick skater of Design Registration No. 1333819 applies a brake only to the front wheel, but not to the rear wheels when the brake lever is operated. Thus, if the front wheel is raised from a ground surface by straightening up the back of a rider during braking so as to bring the center of gravity backward, only the continuously rotating rear wheels move forward in contact with the ground while the center of gravity of a rider's body moves backward. Thus, the rider may fall backward with the kick skater.

In order to avoid such an accident, the kick skater of Design Registration No. 1333819 has a pair of guide wheels behind the rear wheels. The guide wheels are separated from a ground surface when the front wheel is in contact with the ground together with the rear wheels. When the front wheel is raised, the guide wheels come into contact with the ground together with the rear wheels, preventing the kick skater from tilting any more. This can avoid the occurrence of falls.

These guide wheels are, however, provided to prevent the occurrence of falls but not to apply a brake to the rear wheels. Hence, if the front wheel of the kick skater of Design Registration No. 1333819 is raised from a ground surface, neither the front wheel nor the rear wheels can be braked. This may cause the kick skater to travel with the raised front wheel. If the kick skater travels at high speeds, the guide wheels cannot prevent rearward falls. Thus, the rider may abruptly fall backward with the kick skater.

The present invention has been devised to solve the problem. An object of the present invention is to thoroughly eliminate the danger of a rearward fall during braking of a kick skater.

### Disclosure of the Invention

In order to attain the object, a kick skater of the present invention includes:
a front wheel capable of being manually braked;
a rear wheel; and
a lever unit capable of vertically tilting,
wherein when the front wheel is raised to a predetermined height from the ground, one end of the lever unit comes into contact with the ground so as to tilt the lever unit, bringing the other end of the lever unit into contact with the rear wheel.

Moreover, the one end in contact with the ground is located behind the shaft of the rear wheel.
Furthermore, it is particularly preferable that the lever unit has a substantially vertical part continuing to the one end on the ground.

According to the present invention, if the front wheel is raised from a ground surface, the kick skater can be automatically stopped without manual braking, and the kick skater can be prevented from falling rearward. This can thoroughly eliminate the danger of the rider falling rearward.

### Brief Description of the Drawings

FIG. 1 is a perspective view of a kick skater according to a first embodiment of the present invention;
FIG. 2 is a side view of the kick skater;
FIG. 3 is a detail drawing illustrating a rear wheel of the kick skater and a part surrounding the rear wheel;
FIG. 4 is a detail drawing showing the rear wheel and the part surrounding the rear wheel when the front wheel of the kick skater is raised to a predetermined height from the ground;
FIG. 5A is an enlarged side view illustrating the lower part of the kick skater with the front wheel and the rear wheels in contact with the ground;
FIG. 5B is an enlarged side view illustrating the lower part of the kick skater with the front wheel raised to the predetermined height from the ground;
FIG. 6 is a detail drawing illustrating a rear wheel of a kick skater and a part surrounding the rear wheel according to a second embodiment of the present invention; and
FIG. 7 is a detail drawing illustrating the rear wheel and the part surrounding the rear wheel when the front wheel of the kick skater is raised to a predetermined height from the ground.

### Description of Embodiments

### [First Embodiment]

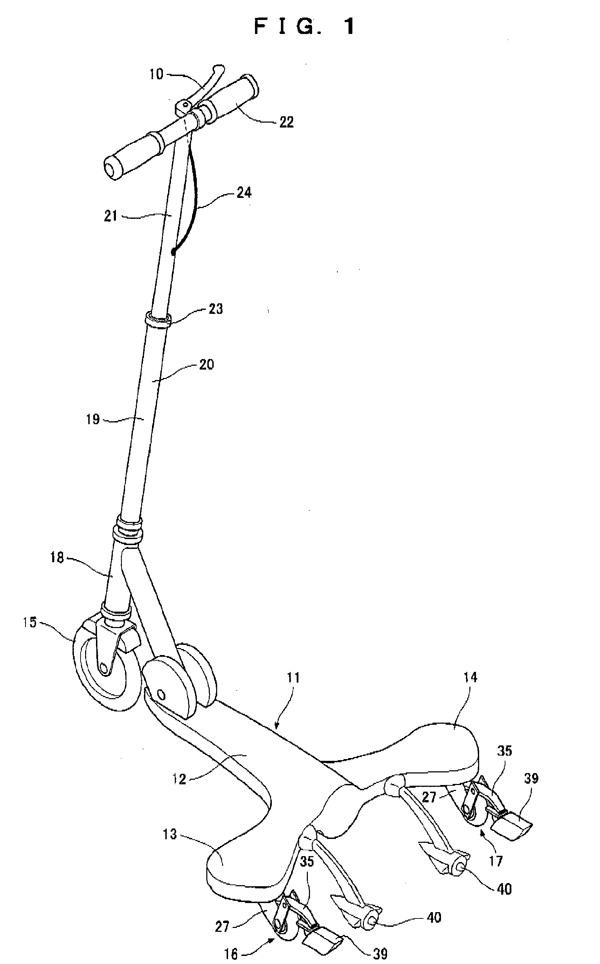

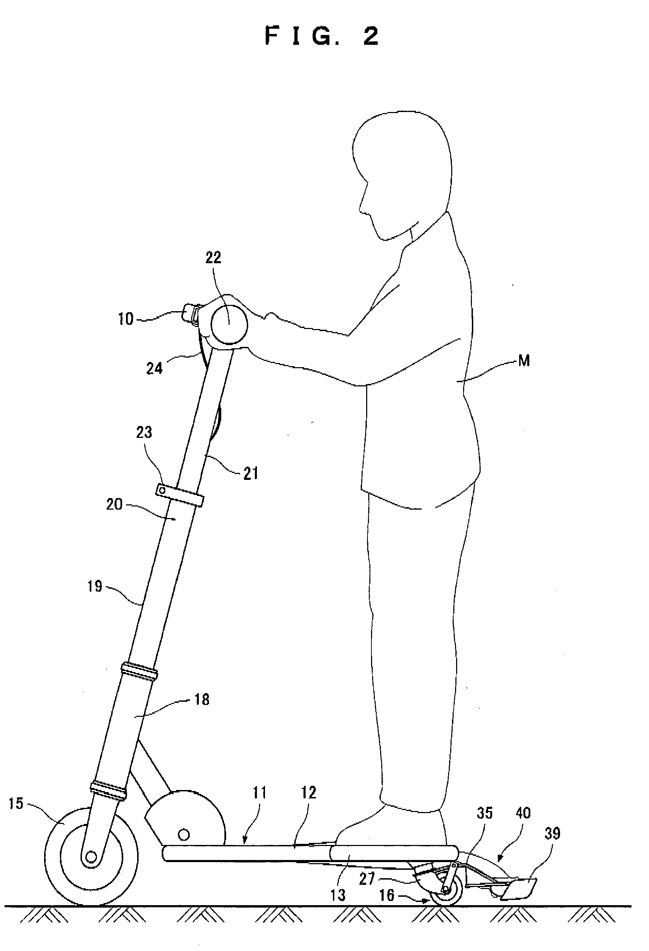

FIGS. 1 and 2 illustrate a kick skater. Reference numeral 11 denotes a board on which a rider M can ride. The board is an inverted-T-type board when a plane is viewed from the rear of the kick skater. Reference numeral 12 denotes a central plate at the front of the board, reference numerals 13 and 14 denote left and right wing plates at the rear of the board, reference numeral 15 denotes a front wheel, and reference numerals 16 and 17 denote a pair of left and right rear wheels.

Reference numeral 18 denotes a handlebar support member that is attached to the front end of the board 11 so as to support a handlebar post 19 rotatable around the axis of the handlebar support member 18. The front wheel 15 is rotatably supported at the lower end of the handlebar post 19. The handlebar post 19 has a cylindrical upper part 20 into which an extendable shaft 21 is slidably fit. Furthermore, a handlebar 22 is attached to the upper end of the extendable shaft 21.

The handlebar 22 has a brake lever 10. An operating wire 24 is connected from the front wheel 15 to the brake lever 10. The brake lever 10 is operated to pull the operating wire 24, applying a braking force to the front wheel 15. In other words, the front wheel 15 can be braked by operating the brake lever 10.

A locking device 23 is provided on the upper end of the handlebar post 19. The locking device 23 fixes the extendable shaft 21 so as to prevent extension and retraction of the extendable shaft 21 and allows rotations of the extendable shaft 21 together with the handlebar post 19. Furthermore, the locking device 23 unlocks the extendable shaft 21 from the handlebar post 19 so as to accept extension and retraction of the extendable shaft 21. The extendable shaft 21 is unlocked to extend or retract, allowing an adjustment to the height of the handlebar 22 according to the height of the rider M.

The paired rear wheels 16 and 17 are located on the respective ends of the wing plates 13 and 14, that is, the rear wheels 16 and 17 on the respective wing plates 13 and 14 are each located at a certain distance from the center of the board 11. As illustrated in FIGS. 1 to 4, the rear wheels 16 and 17 each include a swivel caster with a swiveling axis inclined to the front. With this configuration, the rider M with his/her right foot placed on the right wing plate 14 and his/her left foot placed on the left wing plate 13 swings his/her body to the left and right, turning the board 11 to the left and right with respect to the front wheel 15 on the ground, that is, the handlebar post 19. Thus, the rear wheels 16 and 17 on the ground swivel so as to generate a forward driving force for the kick skater.

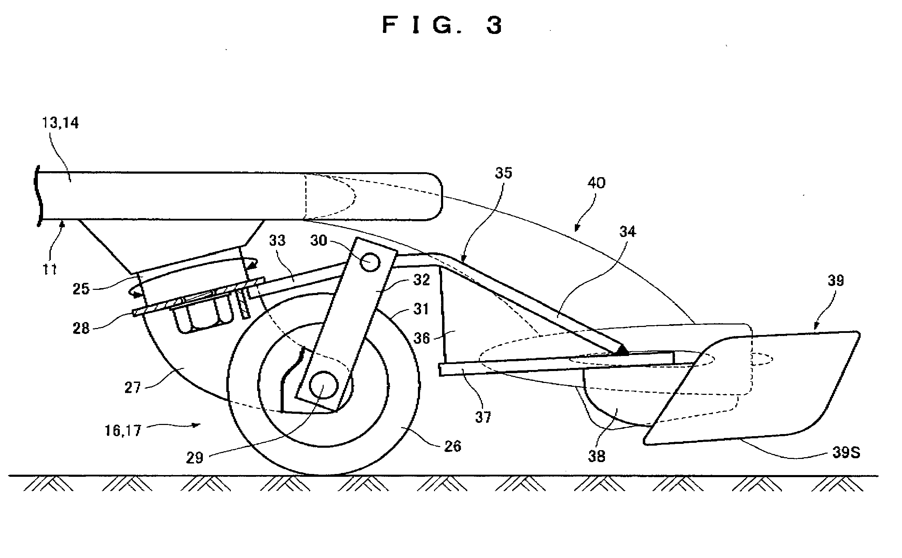

As illustrated in FIG. 3, the swivel caster constituting each of the rear wheels 16 and 17 is attached to the underside of each of the wing plates 13 and 14 so as to swivel via a thrust bearing 25. Reference numeral 26 denotes a wheel. Reference numeral 27 denotes a bracket rotatably supporting the wheel 26. The bracket 27 includes a proximal portion 28 attached to the thrust bearing 25. The wheel 26 is rotatably supported by the bracket 27 via an axle 29.

Reference numeral 35 denotes a lever member that is supported by a spindle 30 so as to vertically tilt, the spindle 30 being disposed in parallel with the axle 29. Reference numeral 32 denotes a support member that is fixed to the bracket 27 at the lower end of the support member 32 and holds the spindle 30 at the upper end of the support member 32. The lever member 35 is a unit of a front part 33 and a rear part 34. The lever member 35 is bent downward at the boundary between the front part 33 and the rear part 34. Specifically, the front end of the front part 33 of the lever member 35 is located under the rear end of the proximal portion 28 while the rear end of the front part 33 is located slightly higher than the rear of the spindle 30. The front end of the rear part 34 of the lever member 35 continues from the rear end of the front part 33 of the lever member 35 while the rear end of the rear part 34 is located slightly higher than the rear of the axle 29 of the wheel 26. In other words, the front part 33 of the lever member 35 is located above the wheel 26 while the rear part 34 of the lever member 35 is located behind the wheel 26. A ground contact part 39 is attached to the rear end of the rear part 34 of the lever member 35 via a connecting plate 37 and reinforcing plates 36 and 38. The ground contact part 39 is a block having a contactable sliding surface 39S, and thus the ground contact part 39 is resistant to wear on the ground during traveling of the kick skater. The lever member 35, the connecting plate 37, the reinforcing plates 36 and 38, and the ground contact part 39 constitute a lever unit 35-39. In other words, the ground contact part 39 is one end of the lever unit 35-39 while the front end of the lever member 35 is the other end of the lever unit 35-39.

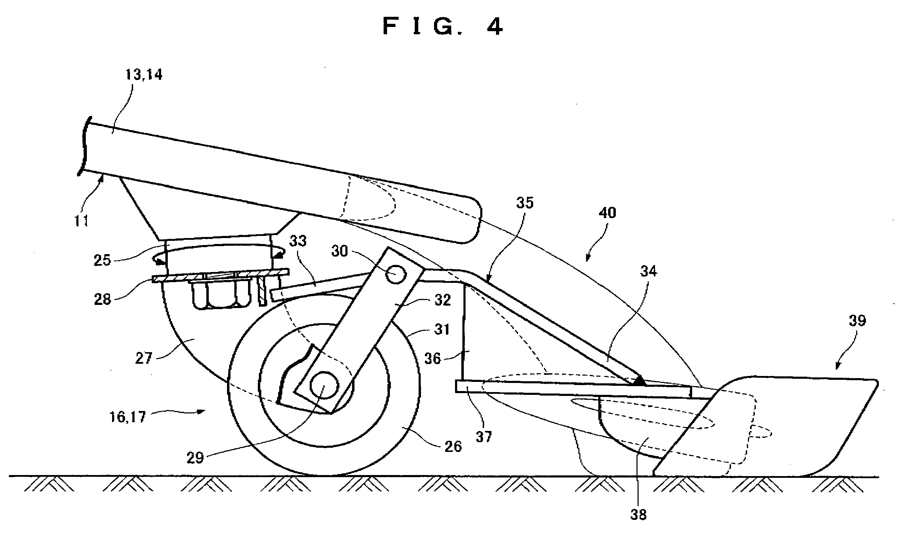

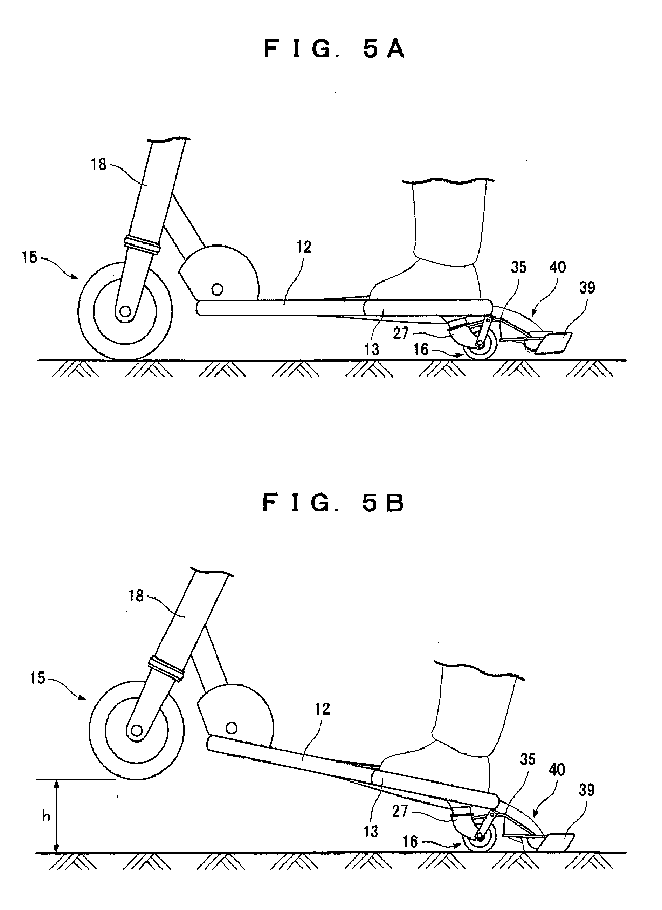

In the lever unit 35-39, the front part 33 of the lever member 35 is supported by the spindle 30 in a tilted manner. Hence, the lever unit 35-39 is heavier behind the spindle 30 than in front of the spindle 30. Moreover, the top surface of the front end of the front part 33 is regulated by the proximal portion 28 of the bracket 27 (the proximal portion 28 acts as a stopper). When the front wheel 15 is in contact with the ground together with the rear wheels 16 and 17, the ground contact part 39 does not come into contact with the ground (see FIGS. 3 and 5A). When the front wheel 15 is raised from the ground to a predetermined height h, the ground contact part 39 (to be correct, the sliding surface 39S) of the lever unit 35-39 comes into contact with the ground so as to tilt the lever member 35, causing the front end underside of the front part 33 to come into contact with a tread 31 of the wheel 26 (see FIGS. 4 and 5B).

Reference numeral 40 in FIGS. 1 to 5 denotes an auxiliary ground contact member that is extended downward from the rear end of the board 11. As illustrated in FIGS. 3 to 5, the auxiliary ground contact member 40 is not in contact with the ground when the front wheel 15 is in contact with the ground together with the rear wheels 16 and 17, whereas the auxiliary ground contact member 40 is in contact with the ground when the front wheel 15 is raised to the predetermined height h from the ground. The auxiliary ground contact member 40 on the ground is located behind the axles 29 of the rear wheels 16 and 17. The auxiliary ground contact member 40 is not always necessary and thus may not be provided.

The action of the kick skater will be described below.
During braking of the front wheel, the rider M straightens up the back of the rider M to bring the center of gravity of a rider's body backward, preventing inertia from causing the rider M to fall forward in speed reduction of the kick skater. If the front wheel 15 is raised from the ground by straightening up the back of the rider M, the continuously rotating rear wheels 16 and 17 move the kick skater forward while only the rear wheels 16 and 17 are in contact with the ground. In this state, the center of gravity of the rider's body moves backward. Thus, the front wheel 15 is further raised to the predetermined height h from the ground as illustrated in FIG. 5B. At this point, the ground contact part 39 comes into contact with the ground so as to tilt the lever member 35. Hence, as illustrated in FIG. 4, the front end underside of the front part 33 of the lever member 35 comes into contact with the tread 31 of the wheel 26; meanwhile, the ground contact part 39 is pressed to the ground. This applies a braking force to the wheels 26 of the rear wheels 16 and 17 and the ground contact part 39, reliably reducing the speed of the kick skater to 0. Furthermore, the ground contact part 39 comes into contact with the ground behind the axle 29 of the wheel 26, preventing the front wheel 15 from being raised any more, that is, the kick skater from falling rearward. When a braking force is applied to the wheel 26 and the ground contact part 39 to reduce the speed of the kick skater, the center of gravity of the body of the rider M is moved forward by inertia, preventing the front wheel 15 from being raised.

If an insufficient braking force is applied to the wheel 26 and the ground contact part 39, the center of gravity of the body of the rider M further moves backward. The front end underside of the front part 33 of the lever member 35 is further pressed to the tread 31 of the wheel 26 while the ground contact part 39 is further pressed to the ground. This can apply a larger braking force to the wheels 26 of the rear wheels 16 and 17 and the ground contact part 39. In other words, a braking force applied to the wheel 26 and the ground contact part 39 increases until the front wheel 15 is prevented from being raised.

The lever units 35-39 follow the swiveling of the rear wheels 16 and 17. This reliably stops the turning kick skater as in forward traveling and prevents the kick skater from falling rearward.

Thus, the first embodiment reliably stops the kick skater and prevents the kick skater from falling rearward even if the front wheel 15 to be braked by an operation of the brake lever 10 is raised from the ground surface and cannot be manually braked. This can thoroughly eliminate a danger that the rider M may fall rearward.

As the center of gravity of the body of the rider M moves backward, a braking force applied to the wheels 26 of the rear wheels 16 and 17 and the ground contact parts 39 increases so as to more reliably stop the kick skater and prevent the kick skater from falling rearward. This can thoroughly and reliably eliminate a danger that the rider M may fall rearward.

In the case where the auxiliary ground contact member 40 is provided, the front wheel 15 raised to the predetermined height h from the ground brings the rear wheels 16 and 17 and the ground contact parts 39 into contact with the ground and brings the auxiliary ground contact members 40 into contact with the ground behind the axles 29 of the rear wheels 16 and 17. This can improve stability and thoroughly eliminate a danger that the rider M may fall rearward.

### [Second Embodiment]

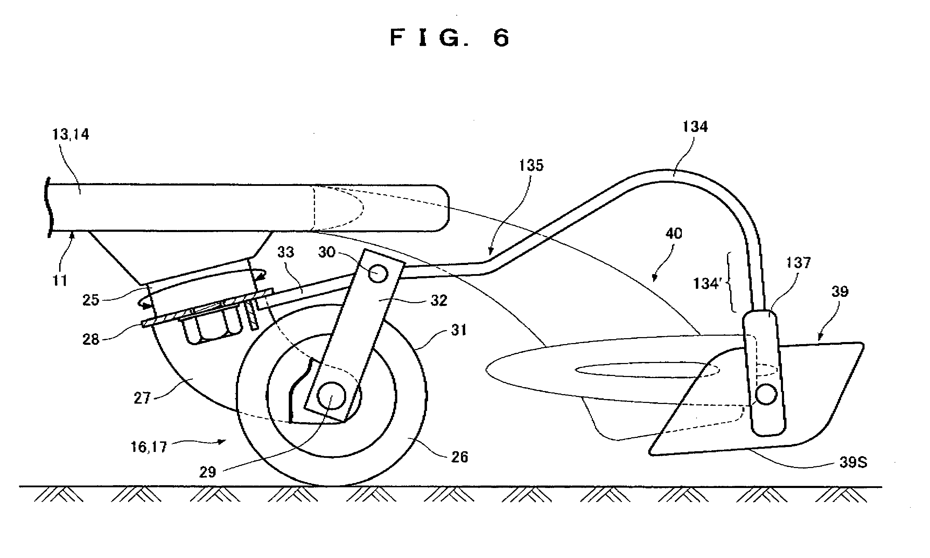

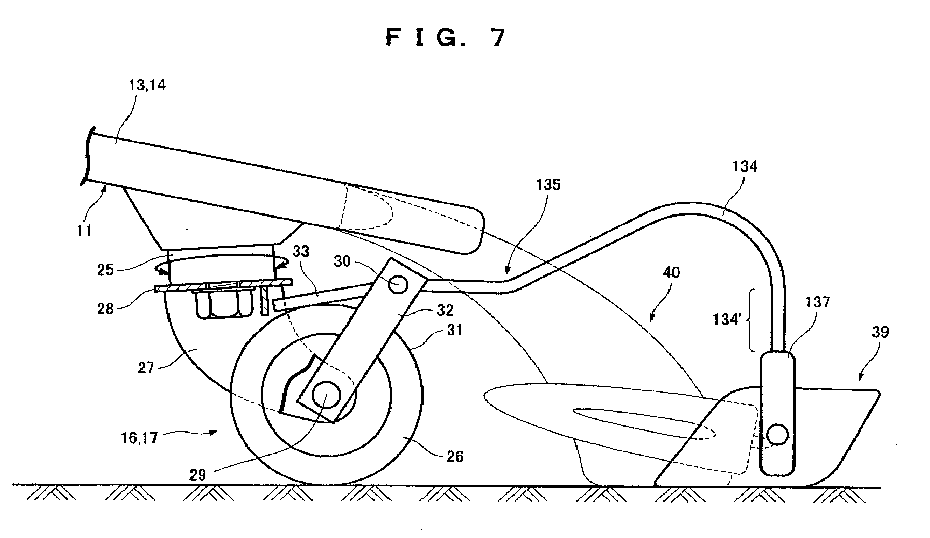

A kick skater according to a second embodiment of the present invention is different from the kick skater of the first embodiment in the shape of a lever member 35.
Referring to FIGS. 6 and 7, the kick skater according to the second embodiment will be described below. Different configurations from the first embodiment will be mainly discussed below. The same configurations as those of the first embodiment are indicated by the same reference numerals and the explanation thereof is omitted.

As illustrated in FIG. 6, a lever member 135 of the second embodiment is a unit of a front part 33 and a rear part 134. The rear part 134 includes a diagonal part that continues to the rear end of the front part 33 and is extended upward to the rear, a vertical part 134', and a curved part that continues to the diagonal part at the front end of the curved part and continues to the vertical part 134' at the lower end of the curved part. A ground contact part 39 is attached to the lower end of the lever member 135, that is, the lower end of the vertical part 134' via a connecting member 137. As illustrated in FIG. 7, the vertical part 134' (continuing to the ground contact part 39) is substantially vertical at a portion continuing to the ground contact part 39 in a state in which the front end underside of the front part 33 is in contact with a tread 31 of a wheel 26. In other words, the lever member 135 sufficiently transmits a force for pressing the ground contact part 39 to the ground and increases a braking force applied to the wheel 26.

Hence, a braking force applied to the wheel 26 is equal to or larger when the kick skater of the second embodiment travels straight ahead or turns around than when the kick skater of the first embodiment travels straight ahead or turns around.

According to the kick skater of the second embodiment, a braking force applied to the wheels 26 of the rear wheels 16 and 17 and the ground contact parts 39 increases so as to more reliably stop the kick skater and prevent the kick skater from falling rearward. This can thoroughly and reliably eliminate a danger that a rider M may fall rearward.

In the first and second embodiments, the kick skater includes the single front wheel 15 and the pair of left and right rear wheels 16 and 17. The number of wheels is not particularly limited.

## Claims

1. A kick skater comprising:
a front wheel capable of being manually braked;
a rear wheel; and
a lever unit capable of vertically tilting,
wherein when the front wheel is raised to a predetermined height from ground, one end of the lever unit comes into contact with the ground so as to tilt the lever unit, bringing the other end of the lever unit into contact with the rear wheel.

2. The kick skater according to claim 1, wherein the one end in contact with the ground is located behind a shaft of the rear wheel.

3. The kick skater according to claim 2, wherein the lever unit has a substantially vertical part continuing to the one end on the ground.
